# EUROPEAN PATENT SPECIFICATION

(11) **EP 2 300 248 B1**
(45) Date of publication and mention of the grant of the patent: **28.11.2018**
(21) Application number: 09758974.1
(22) Date of filing: 18.05.2009
(51) Int. Cl.: B60G 13/06, B60G 15/06, F16F 9/34, B60G 11/28, B60G 11/27, F16F 9/05

(54) **GAS SPRING PISTON WITH PARTIAL BELLOWS SUPPORT FEATURE AND GAS SPRING ASSEMBLY INCLUDING SAME**
GASFEDERKOLBEN MIT TEILBALGSTÜTZMERKMAL UND GASFEDERANORDNUNG DAMIT
PISTON À RESSORT À GAZ MUNI D'UN ÉLÉMENT DE SUPPORT PARTIEL À SOUFFLET ET ENSEMBLE À RESSORT À GAZ COMPRENANT CELUI-CI

(30) Priority: 05.06.2008 US 133578; 02.07.2008 US 166868
(43) Date of publication of application: 30.03.2011
(73) Proprietor: Firestone Industrial Products Company, LLC, Nashville, TN 37201 (US)
(72) Inventor: EGOLF, Stephen, R., Indianapolis IN 46219 (US); GRABARZ, Andrew, Cicero IN 46034 (US); STREET, Stephen, C., Carmel IN 46033 (US); MOULIK, Pradipta, N., Carmel IN 46032 (US)
(74) Representative: Schwarz, Markku
(86) International application number: PCT/US2009/044358
(87) International publication number: WO 2009/148813

(56) References cited:
- EP-A1- 0 647 795
- EP-A1- 1 657 467
- EP-A1- 2 093 082
- EP-A2- 0 296 445
- WO-A1-00/70238
- DE-A1- 10 149 057
- DE-A1- 10 242 436
- DE-U1-202005 007 933
- FR-A3- 2 827 550
- US-A1- 4 506 910
- US-A1- 2006 049 600
- US-A1- 2006 220 283
- US-A1- 2006 226 586
- US-A1- 2007 114 706
- US-B1- 6 234 460
- US-B1- 6 386 524

## Description

### BACKGROUND

The subject matter of the present disclosure broadly relates to the art of gas spring devices and, more particularly, to a gas spring assembly according to the preamble of claim 1. Examples of such gas spring assemblies are shown in documents DE 101 49 057 A1, US 6 386 524 B1 and in DE 20 2005 007933 U1.

A gas spring assembly comprising the characterizing part of claim 1 is shown in the published patent application EP 2 093 082 A1, this document is only prior art under Article 54(3) EPC however.

The subject matter of the present disclosure finds particular application and use in conjunction with suspension systems of wheeled vehicles, and will be shown and described herein with particular reference thereto. However, it is to be appreciated that the present exemplary embodiments are also amenable to use in other applications and environments. For example, the subject matter of the present disclosure could be used in operative association with structural supports, height adjusting systems and/or actuators associated with industrial machinery, components thereof and/or other such equipment on which lateral load conditions may be encountered. Accordingly, the subject matter of the present disclosure is not intended to be limited to use associated with vehicle suspensions and it is to be understood that the embodiments shown and described herein are merely exemplary.

Gas spring assemblies of various kinds and constructions are well known and commonly used in vehicle suspension systems, industrial machinery as well as other equipment and devices to provide dynamic load support between sprung and unsprung masses associated therewith. A typical gas spring assembly includes two opposing end members with a flexible wall or sleeve secured between the two end members that at least partially define a spring chamber. A quantity of pressurized gas, usually air, is contained within the spring chamber and acts on the spaced end members as well as opposing portions of the flexible wall to support the load of the sprung mass or a force that is otherwise applied to the gas spring assembly.

It is commonly understood that gas spring assemblies are well suited for supporting loads acting axially (i.e., longitudinally between the opposed end members thereof), but that only a minimal lateral load, if any, can be supported by a typical gas spring assembly. Thus, applications that are normally identified as being well suited for the use of gas spring assemblies primarily involve the transfer of axially applied loads. As a result, there is a considerable body of art that is directed to arrangements for securing the gas spring assembly to a corresponding structural member in a way that provides sufficient axial support. Such arrangements commonly include the use of threaded fasteners, fixed mounting studs with threaded nuts and/or snap together-type connections.

It has been recognized, however, that in some applications the action of the gas spring assembly itself can generate lateral load conditions on one or more of the end members thereof. For example, in an application in which one end member is disposed at and/or moved through an angle relative to the other end member, the flexible wall is urged outwardly toward the open end of the included angle between the end members. This action can generate a lateral load acting on one or both of the end members. Unfortunately, many known securement arrangements, having been designed to withstand axially-applied loads, as discussed above, are less well suited for use under lateral or shear loads. Therefore, a need exists for an improved arrangement for engaging an end member of a gas spring assembly with a corresponding structural member such that the interface can withstand the aforementioned lateral load conditions, such as may be encountered by a vehicle suspension system, for example.

Various arrangements have been proposed to overcome the above-described difficulties. One example of such an arrangement is shown in U.S. Patent No. 5,342,139, which discloses an attachment device for mounting an end member of an air spring assembly on a corresponding support component. Another example of such an arrangement is shown in U.S. Patent No. 6,752,407, which discloses a multi-component and mounting plate arrangement for securing an air spring along a structural component. Still another example of such an arrangement is shown in U.S. Patent No. 6,945,548, which discloses a spacer that is adapted to engage the air spring assembly and includes a winged portion that engages a slot in the corresponding structural component. Yet another example of such an arrangement is shown in U.S. Patent Application Publication No. 2006/0055094, which discloses an air spring with end members having snap-in attachments for engaging the corresponding structural members.

While the above-described arrangements have met with some degree of success, numerous difficulties and/or disadvantages have been identified with the same, which have undesirably impacted the widespread adoption and use of the same. Such difficulties and/or disadvantages include the use of additional components, such as extra fasteners, retention pins, mounting brackets and/or other components, which undesirably increase inventory and production costs and can also raise installation and maintenance issues. What's more, certain design configurations, such as snap-in type designs, for example, may be insufficiently robust to withstand both the axial and lateral load conditions, particularly those associated with heavy-duty applications. Furthermore, some known arrangements utilize features that extend radially-outwardly beyond the periphery of at least a portion of the gas spring assembly, which can result in space constraints for other components.

Additionally, attachment and/or other features of suspension components of vehicles are often disposed within approximately the same area in which a gas spring assembly of a suspension system also resides. As such, accommodations are often provided on one or more components of gas spring assemblies to help avoid interference with the attachment and/or other features while permitting the component of the gas spring assembly to be mounted or otherwise secured to a suspension component in that same area.

Such accommodations are commonly used in association with gas spring assemblies of the rolling lobe-type, which typically include a piston that has an outer side wall and flexible sleeve that is secured along the piston such that a lobe formed thereby can roll along the outer side wall as the gas spring assembly undergoes displacement. As one example of such an accommodation, the outer side wall of the piston can be supported or otherwise disposed in vertically spaced relation to the associated structural component along which the piston is secured. This accommodation can be accomplished in any suitable manner. For example, the piston of the gas spring assembly can include a bottom or end wall that the abuttingly engages the associated structural component with the nearest end of the outer side wall being disposed in spaced relation to the bottom wall. As another example, a spacer or other suitable component can be positioned and secured between the piston of the gas spring assembly and the associated structural component to space the end of the outer side wall a distance from the associated structural component.

In any case, such an accommodation often results in a gap or space being formed between the end of the outer side wall of the piston and the associated structural component to which the gas spring assembly is mounted. Under certain circumstances and conditions of operation of the gas spring assembly, the lobe of the flexible sleeve can begin to roll off of the edge of the outer side wall and into the aforementioned gap or space. Such situations are generally undesirable, as the same can result in decreased performance (e.g., a reduction in spring rate) of the gas spring assembly. Additionally, it has been recognized that as the gap or space increases in size, even greater decreases in performance can occur.

Therefore, it is believed desirable to develop a gas spring assembly that overcomes the foregoing and other issues and disadvantages.

### BRIEF DESCRIPTION

A gas spring assembly in accordance with the subject matter of the present invention is defined in claim 1.

Additionally, a gas spring assembly according to the foregoing paragraph can be provided with the features of the dependent claims.

### BRIEF DESCRIPTION OF THE DRAWINGS

FIG. 1 is a schematic representation of a vehicle that includes gas spring assemblies operatively connected to vehicle structures using cooperative mounting arrangements in accordance with the subject matter of the present disclosure.
FIG. 2 is a side view of the vehicle in FIG. 1 taken from along line 2-2 thereof.
FIG. 3 is an enlarged portion of the side view in FIG. 2 showing in greater detail a gas spring assembly including an exemplary mounting arrangement for cooperative use with an associated vehicle structure.
FIG. 4 is top perspective view of an exemplary end member of the gas spring assembly in FIG. 3.
FIG. 5 is a bottom perspective view of the exemplary end member in FIG. 4.
FIG. 6 is a bottom plan view of the exemplary end member in FIGS. 4 and 5.
FIG. 7 is a cross-sectional side view of the exemplary end member in FIGS. 4-6 taken from along line 7-7 in FIG. 6.
FIG. 8 is a cross-sectional side view of the exemplary end member in FIGS. 4-7 taken from along line 8-8 in FIG. 6.
FIG. 9 is a top perspective view of an end member in accordance with the invention of the gas spring assembly in FIG. 3.
FIG. 10 is a bottom perspective view of the end member in FIG. 9.
FIG. 11 is a side view of the end member in FIGS. 9 and 10 taken from along line 11-11 in FIG. 9.
FIG. 12 is a side view of the end member in FIGS. 9-11 taken from along line 12-12 in FIG. 11.

### DETAILED DESCRIPTION

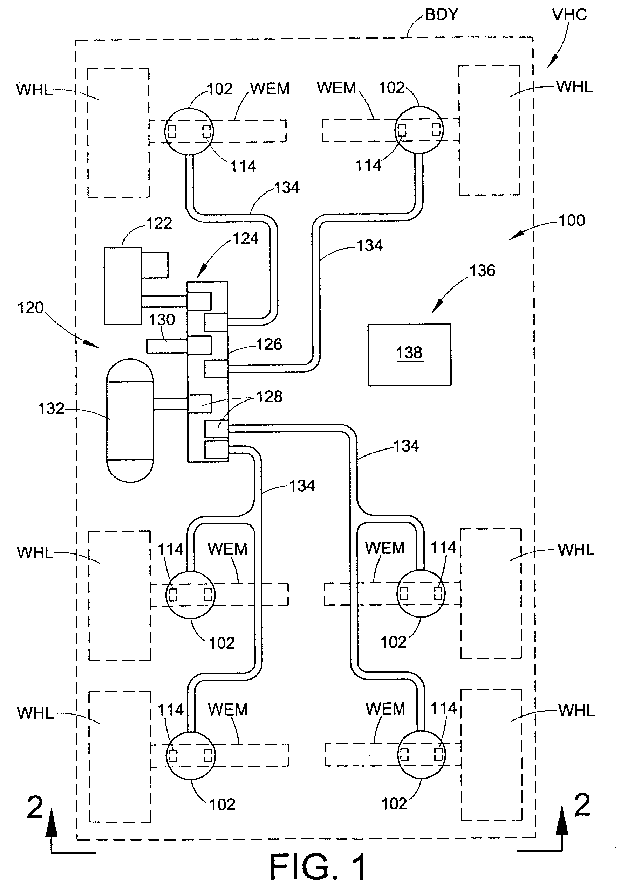

Turning now to the drawings, wherein the showings are for the purpose of illustrating examples of the subject matter of the present disclosure and which are not intended as a limitation of the same, FIG. 1 illustrates a suspension system **100** disposed between a sprung mass, such as an associated vehicle body **BDY,** for example, and an unsprung mass, such as an associated wheel **WHL** or an associated wheel-engaging member **WEM,** for example, of an associated vehicle **VHC.** It will be appreciated that any such suspension system can include any number of one or more systems, components and/or devices and that the same can be operatively connected between the sprung and unsprung masses of the associated vehicle in any suitable manner. For example, such a suspension system can include a plurality of damping members (not shown), which can be operatively connected between the sprung and unsprung masses of the associated vehicle in any suitable manner.

Additionally, or in the alternative, such a suspension system can include a plurality of gas spring assemblies that are supported between the sprung and unsprung masses of associated vehicle **VHC.** In the example shown in FIG. 1, suspension system **100** includes six gas spring assemblies **102,** one or more of which is disposed toward each corner of the associated vehicle adjacent a corresponding wheel **WHL** thereof. However, it will be appreciated that any other suitable number of gas spring assemblies **102** could alternately be used and that such gas spring assemblies can be disposed in any other suitable configuration or arrangement.

As will be shown and discussed in greater detail hereinafter, gas spring assemblies **102** include a first or upper end member, such as a bead plate **104,** for example, a second or lower end member, such as piston **106,** for example, and a flexible wall, such as an elongated sleeve **108,** for example, that is secured therebetween in a substantially fluid-tight manner. Thus, it will be recognized that the gas spring assemblies shown and described herein (e.g., gas spring assemblies 102) are of a rolling lobe-type construction.

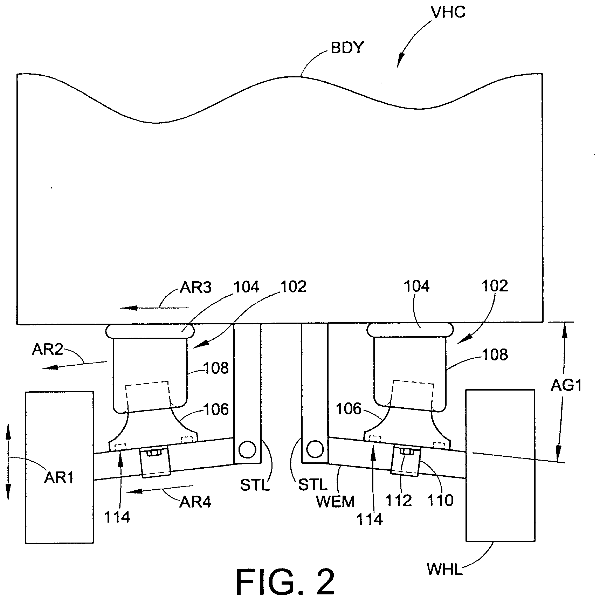

Furthermore, it will be appreciated that the gas spring assemblies can be operatively connected between the sprung and unsprung masses of an associated vehicle in any suitable manner. For example, gas spring assemblies **102** are shown in FIG. 2 as being operatively connected between wheel-engaging members **WEM** and body **BDY** of associated vehicle **VHC.** It will be appreciated, however, that the configuration of vehicle **VHC** in FIG. 2 is merely a schematic representation of the structural components of the sprung and unsprung masses of the vehicle. Thus, it will be understood that this schematic representation is provided for purposes of discussion and ease of understanding and is not intended to be in any way limiting.

With further reference to the exemplary arrangement in FIG. 2, wheel-engaging members **WEM** are shown as being pivotally attached to structural components **STL** such that the wheel-engaging members move through an angle **AG1** relative to body **BDY** as wheels **WHL** undergo vertical movements (e.g., jounce and rebound actions), which movements are represented in FIG. 2 by arrow **AR1.** Thus, it will be recognized that as wheels **WHL** move vertically away from body **BDY** (i.e., under a rebound condition), angle **AG1** between the body and the corresponding wheel-engaging member will increase and gas spring assembly **102,** which is operatively connected therebetween, will become elongated. It will also be recognized that as wheels **WHL** move vertically toward body **BDY** (i.e., under a jounce condition), angle **AG1** will decrease and gas spring assembly **102** will become compressed. Due, at least in part, to the body and wheel-engaging member acting on the gas spring assembly at an angle to one another, gas spring assembly **102** will normally be pinched, squeezed or otherwise biased toward the open end of angle **AG1,** as is represented by arrow **AR2.** This biasing action results in the generation of forces that act laterally on the opposing end members of the gas spring assembly (e.g., bead plate **104** and piston **106**), as is indicated by arrows **AR3** and **AR4,** respectively, in FIG. 2. Thus, the biasing action acts to urge the end members of the gas spring assembly in a laterally-outward direction, such as toward wheels **WHL,** for example.

It is common practice for gas spring assemblies to be secured to the associated sprung and unsprung masses in a manner suitable for withstanding longitudinally (i.e., axially) acting forces or loads. Additionally, it will be appreciated that securement components and/or features of a wide variety of types, kinds, configurations and/or constructions have been used to secure the end members of the gas spring assemblies to the vehicle components in the longitudinal (i.e., axial) direction. In many such known mounting arrangements, one or more fasteners or other securement elements will pass through an opening in the structural component on which the end member is supported to engage the end member and thereby secure the gas spring assembly to the structural component.

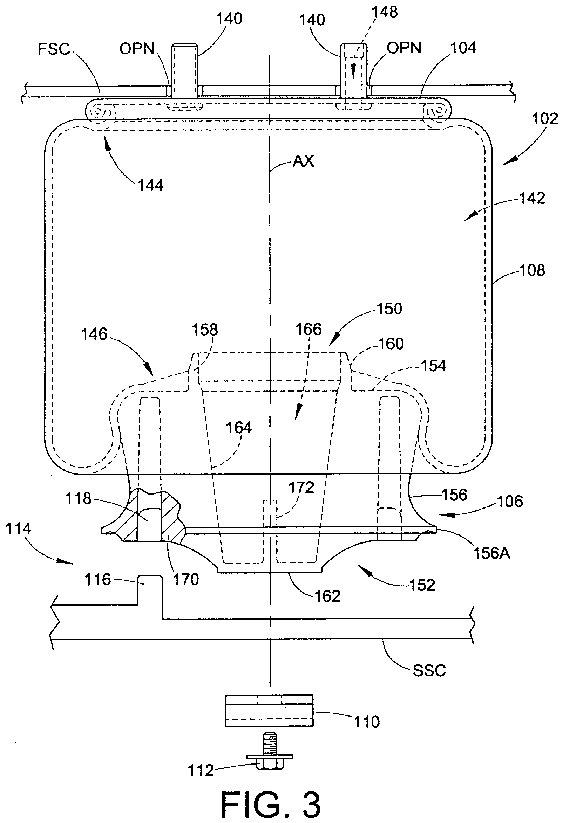

In other situations, however, it is desirable to secure the gas spring assembly to the structural component without the use of fasteners or other securement elements that extend through (i.e., pass through an opening in) the structural component. Such external mounting or clamping arrangements may be employed for any one or more of a variety of reasons, such as space constraints and/or strength-related issues, for example. While it will be appreciated that any suitable external mounting or clamping arrangement may be used, one example of such an arrangement is shown and described in U.S. Patent No. 6,945,548, which illustrates an air spring bracket (702) in FIG. 19 thereof and which is described therein at least column 14 from about lines 23-47. A similar arrangement is shown in FIGS. 2 and 3 of the present disclosure that includes an exemplary bracket **110** extending around three sides of wheel-engaging member **WEM** with piston **106** being secured thereto by way of fasteners **112** (only one of which is shown) that interconnect bracket **110** and piston **106** to thereby secure the gas spring assembly on or along the structural component (e.g., wheel-engaging member **WEM**).

In accordance with one aspect of the subject disclosure, a cooperative mounting arrangement is provided in which an end member of a gas spring assembly and a corresponding vehicle component associated therewith interengage one another. In this way, the aforementioned laterally-acting forces associated with the pinching action can be transferred from the end member to the corresponding structural component without undesirably effecting the gas spring assembly. And, it will be appreciated that a cooperative mounting arrangement in accordance with the subject matter of the present disclosure may find particular application and use in connection with external mounting or clamping arrangements that extend along the exterior of the wheel-engaging member (or other vehicle component) and are secured thereto without the use of elements (e.g., a fastener or other securement device) that extend through the wheel-engaging member (or other vehicle component).

It will be appreciated that any suitable configuration can be used to secure the opposing end members of the gas spring assembly to the vehicle components and thereby accommodate any laterally-extending forces urging the end members toward the open end of angle **AG1,** as discussed above. As one example, a cooperative mounting arrangement **114** can include a projection **116** (FIG. 3) extending from wheel-engaging member **WEM** and a recess or pocket **118** (FIG. 3) formed into an end member, such as piston **106,** for example, of the gas spring assembly or another component operatively associated therewith, such as a spacer, for example. Such a cooperative mounting arrangement permits the end member of the gas spring assembly and the wheel-engaging member (or other vehicle component) to interengage one another and thereby maintain the position of the end member relative to the wheel-engaging member (or other vehicle component) under any laterally acting forces, such as may be generated by the above-discussed compressing or pinching action of the vehicle components, for example.

Suspension system **100** can also optionally include a pressurized gas supply system **120** that is operatively associated with the gas spring assemblies for selectively supplying pressurized gas (e.g., air) thereto and selectively transferring pressurized gas therefrom. In the exemplary embodiment shown in FIG. 1, gas supply system **120** includes a pressurized gas source, such as a compressor **122,** for example, for generating pressurized air or other gases. The gas supply system can also include any number of one or more control devices of any suitable type, kind and/or construction that may be capable of affecting the selective transfer of pressurized gas. For example, a valve assembly **124** is shown as being in communication with compressor **122** and can be of any suitable configuration or arrangement. In the exemplary embodiment shown, valve assembly **124** includes a valve block **126** with a plurality of valves **128** supported thereon. Valve assembly **124** can also optionally include a suitable exhaust, such as a muffler **130,** for example, for venting pressurized gas from the system. Optionally, pressurized gas supply system **120** can also include a reservoir **132** in fluid communication with valve assembly **124** and suitable for storing pressurized gas.

The one or more control devices, such as valve assembly **124,** for example, can be in communication with gas spring assemblies **102** in any suitable manner, such as, for example, through suitable fluid transmission lines **134.** As such, pressurized gas can be selectively transmitted to and/or from the gas springs through valve assembly **124,** such as to alter or maintain vehicle height at one or more corners of the vehicle, for example.

Suspension system **100** also includes a control system **136** that is capable of communication with any one or more other systems and/or components (not shown) of suspension system **100** and/or of which **VHC** and is capable of selective operation and control of the suspension system. Control system **136** includes a controller or electronic control unit (ECU) **138** in communication with compressor **122** and/or valve assembly **124,** such as through a suitable conductor or lead (not shown), for example, for selective operation and control thereof, including supplying and exhausting pressurized fluid to and from gas spring assemblies **102.** Additionally, it will be appreciated that controller **138** can be of any suitable type, kind and/or configuration.

Control system **136** can also optionally include one or more height or distance sensing devices (not shown) as well as any other desired systems and/or components. Such height sensors, if provided, are preferably capable of generating or otherwise outputting a signal having a relation to a height or distance, such as between spaced components of the vehicle, for example. It will be appreciated that any such optional height sensors or any other distance-determining devices, if provided, can be of any suitable type, kind, construction and/or configuration, such as mechanical linkage sensors, ultrasonic wave sensors or electromagnetic wave sensors, such as may operate using ultrasonic or electromagnetic waves, for example.

Turning now to FIG. 3, gas spring assembly **102** includes a central axis **AX** that extends longitudinally between the first end member (e.g., bead plate **104**), which is disposed toward one end of axis **AX,** and the opposing second end member (e.g., piston **106**), which is spaced from the first end member toward another end of axis **AX.** The first end member is disposed along a first or upper structural component **FSC,** such as a vehicle body or chassis, for example, and can be adapted for securement thereto in any suitable manner. For example, first structural component **FSC** is shown in FIG. 3 as including holes or openings **OPN** that are suitable for securement of the first end member to the first structural component. Gas spring assembly **102** is shown as including mounting studs **140** that project axially-outwardly from bead plate **104** and extend through openings **OPN** in the first structural component. Suitable fastening elements, such as threaded nuts (not shown), for example, can be used to secure bead plate **104** to first structural component **FSC.** It will be recognized that such a mounting arrangement will generally be sufficient to oppose any lateral loads or forces acting on the first end member (e.g., bead plate **104**), such as the lateral forces represented by arrow **AR3** in FIG. 2, for example.

The second end member is disposed along a second or lower structural component **SSC,** such as an axle or other wheel-engaging member, for example, and is adapted for securement on or along this second structural component. In one preferred arrangement, the second end member is adapted for securement to the second structural component by way of an external mounting bracket or other component or arrangement that does not rely upon the use of fasteners extending through the second structural component. One example of such an external mounting arrangement is shown in FIGS. 2 and 3 as bracket **110** and fasteners **112.** However, it will be appreciated that any other suitable arrangement could alternately be used.

Additionally, at least one of the end members of a gas spring assembly and a corresponding one of the structural components associated therewith include a cooperative mounting arrangement (e.g., cooperative mounting arrangement **114**) suitable for accommodating laterally-acting forces, such as have been previously described, for example. In one preferred arrangement, such a cooperative mounting arrangement will be used in cases in which an external mounting bracket or other arrangement is employed that does not rely upon the use of fasteners that extend through openings in the associated structural component, such as the external mounting arrangement in FIGS. 2 and 3 using bracket **110** and fasteners **112,** for example. It will be appreciated that the use of such a cooperative mounting arrangement can act to oppose any such laterally-acting forces, which may not be sufficiently accommodated by an external mounting arrangement acting alone.

As mentioned above, the opposing end members (e.g., bead plate **104** and piston **106**) can be secured to the flexible wall (e.g., flexible sleeve **108**) in any manner suitable for forming a substantially fluid-tight seal therewith such that a spring chamber **142** is at least partially defined therebetween. As one example, the flexible wall (e.g., flexible sleeve **108**) is shown and described herein as being of an elongated sleeve-type configuration that is capable of forming a rolling lobe along the exterior of an end member (e.g., piston **104**) of the gas spring assembly. However, it is to be understood that the subject matter of the present disclosure is capable of broad use in association with any suitable type, kind, and/or configuration of gas spring assembly.

Also, the flexible wall (e.g., flexible sleeve **108**) can be secured between the first and second end members in any suitable manner. As shown in FIGS 2 and 3, for example, flexible sleeve **108** extends between opposing ends **144** and **146.** End **144** is shown as being an open end that is connected along bead plate **104** using a crimped arrangement to form a substantially fluid tight seal between the bead plate and the end of the flexible sleeve. End **146** of the flexible sleeve is received on a portion of piston **106** and is secured thereon by way of a snap-fit connection. Pressurized gas can be communicated into and out of spring chamber **142** in any suitable manner, such as, for example, through a passage **148** extending through one of mounting studs **140.**

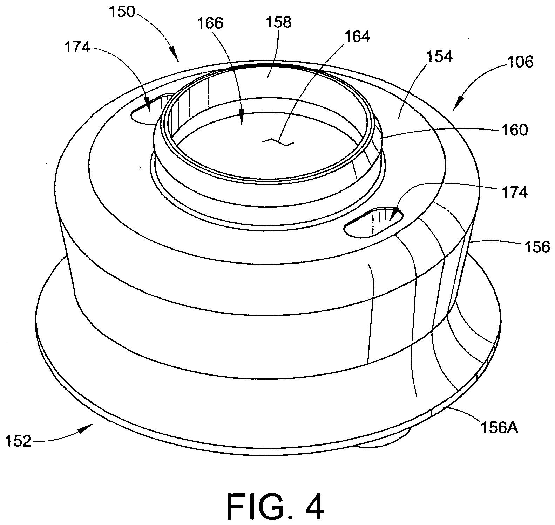

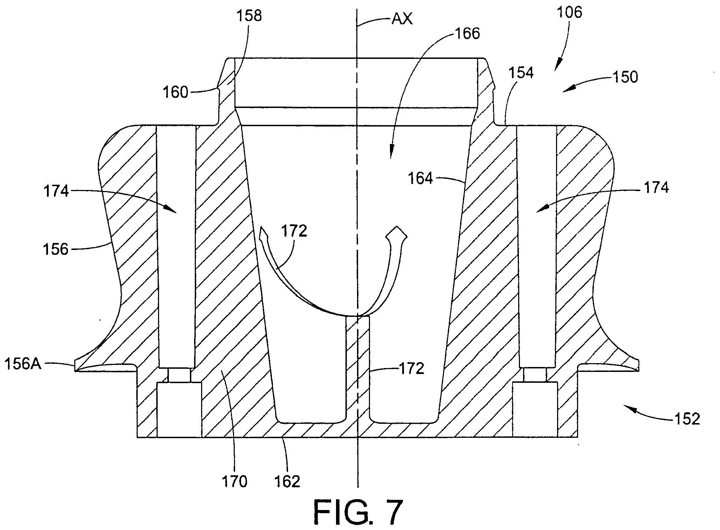

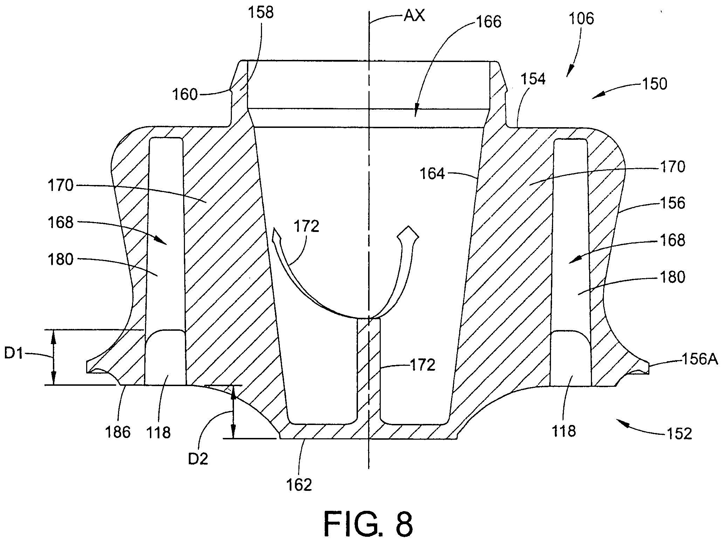

With reference, now, to FIGS. 3-8, exemplary piston **106,** not in accordance with the invention, extends axially between opposing first and second ends, which are generally represented by reference numbers **150** and **152,** respectively. First end **150** includes a first end wall **154** that is adapted to abuttingly engage flexible sleeve **108** and an outer side wall **156** that extends from along end wall **154** toward second end **152** of the piston. Outer side wall **156** is shown as having a curvilinear shape or configuration. However, it will be appreciated that any suitable size, shape and/or configuration could alternately be used, such as a frustoconical or a cylindrical shape, for example. In any case, outer side wall **156** will include a radially-outermost side wall portion that at least partially defines the outermost radial extent of the piston. In the exemplary embodiment shown in FIGS. 3-8, this radially-outmost side wall portion is identified by reference number **156A** and will have an overall dimension (not shown) representing the maximum diameter or width of the radially-outermost side wall portion. An axially-extending annular wall **158** projects from along end wall **154** generally opposite the direction of outer side wall **156** and can be dimensioned to cooperatively receive an open end (e.g., second end **146**) of the flexible wall associated therewith. A radially outwardly-extending projection or lip **160** is shown as being disposed along annular wall **158** and can operate to at least partially maintain second end **146** on annular wall **158.** It will be appreciated, however, that any suitable configuration and/or arrangement can alternately be used for securement of the flexible wall on or along the piston and, thus, that annular wall **158** and lip **160** are optional.

Piston **106** also includes a second end wall **162** that is disposed along second end **152** and adapted to cooperatively engage second structural component **SSC.** In the exemplary case shown, second end wall **162** is approximately planar and adapted to abuttingly engage second structural component **SSC.** Piston **106** further includes an inner side wall **164** that at least partially defines an inner cavity **166.** In the exemplary arrangement shown, inner side wall **164** extends in an approximately longitudinal direction and generally between first and second end walls **154** and **162.** Inner side wall **164** is disposed in radially inwardly-spaced relation to outer side wall **156** such that an outer cavity **168** is formed therebetween. A plurality of outwardly-extending support walls **170** extend between the inner and outer side walls and thereby structurally interconnect the same. Additionally, a plurality of inner support walls **172** can optionally be included within inner cavity **166,** such as, for example, along second end wall **162** and extending generally between different portions of inner side wall **164.** Support walls **170** can be of any suitable quantity, configuration and/or arrangement and can extend along any portion of the longitudinal length of piston **106.** In one exemplary case, outer support walls **170** extend radially-outwardly from inner side wall **164** and along approximately the entire longitudinal length of outer side wall **156** such that outer cavity **168** is separated into a plurality of individual chambers (not numbered). However, it will be understood that any other number, arrangement and/or configuration of inner support walls **172** and/or outer support walls **170** can alternately be used.

Piston **106** also includes at least one securement feature suitable for at least partially securing the piston on or along the corresponding structural component. In the exemplary arrangement shown, piston **106** includes a plurality of passages **174** that extend through the piston and are suitable for receiving at least a portion of a fastener, such as fastener **112,** for example. Mating fastener components, such as threaded nuts (not shown), for example, could be received within a portion of passages **174** or, alternately, mating threads (not shown) could be provided within the passage, either directly in the piston material or in the form of threaded inserts (not shown) embedded within the piston. It will be appreciated, however, that any other suitable arrangement could alternately be used, such as the use of mounting studs (not shown) projecting from the piston, for example.

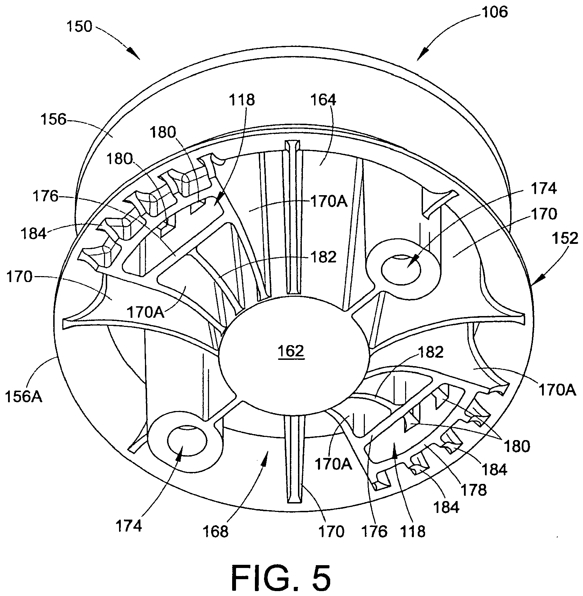

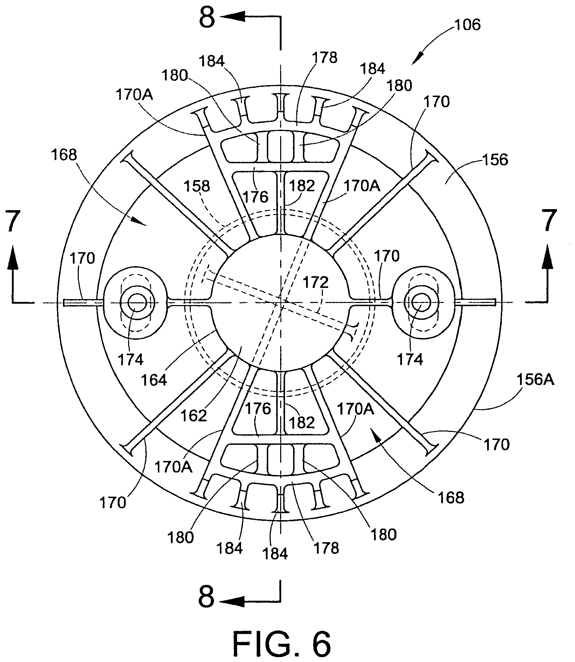

As discussed above, piston **106** includes at least one mounting feature adapted to cooperatively engage a corresponding mounting feature on an associated structural component such that the interengagement of the cooperative mounting features can act to withstand, overcome or otherwise accommodate laterally-acting loads or forces that may be applied to the piston. As is further illustrated in FIGS. 5 and 6, piston **106** includes a recess **118** dimensioned to cooperatively receive a corresponding projection **116** (FIG. 3) formed, installed or otherwise provided on or along second structural component **SSC** with the recess and projection together forming cooperative mounting arrangement **114.** Additionally, any number of one or more recesses, such as recesses **118,** for example, can be used. As illustrated in the accompanying drawing figures, two recess disposed circumferentially opposite one another (i.e., about 180 degrees apart) are provided on piston **106** and permit the same to be mounted in either of two rotational orientations. However, it is to be understood that any number of one or more cooperative mounting arrangements or portions thereof can be used (e.g., one projection with two or more cooperative recesses).

Recesses **118** can be provided on piston **106** in any suitable manner and using any suitable configuration and/or arrangement of structural elements and features to at least partially define the recess. In the exemplary arrangement shown, recess **118** is positioned in between outer and inner side walls **156** and **164** such that forces and/or loads transferred to piston **106** by way of the recess are not directly applied to either of the inner or outer side walls, which is a preferred arrangement. Thus, in such a preferred arrangement, projection **116** will not directly abuttingly engage either of the inner side wall or the outer side wall. Rather, recess **118** can be established by one or more recess walls extending between adjacent ones of the outer support walls, which are identified in FIGS. 5 and 6 by reference numbers **170A.** It will be appreciated that the one or more recess walls that at least partially define the one or more recesses of the end member can be of any suitable size, shape, construction, configuration and/or arrangement. In the exemplary arrangement shown, the recesses are at least partially defined by inner and outer recess walls **176** and **178,** respectively, with the inner recess wall being approximately straight and the outer recess wall being somewhat curved.

A piston not in accordance with the subject matter of the present invention (e.g., piston **106**) can optionally include one or more support walls or ribs extending between two of the recess walls and/or between one of the recess walls and another wall of the piston. It will be appreciated that such optional support ribs can act to buttress the recess walls and, thus, can result in a more robust recess that may be capable of increased performance (e.g., load carrying capacity). In the present exemplary arrangement, piston **106** includes a plurality of recess support ribs **180** extending between inner and outer recess walls **176** and **178.** Additionally, piston **106** is shown as including an inner support rib **182** extending between inner recess wall **176** and inner side wall **164.** Piston **106** is also shown as including a plurality of outer support ribs **184** extending between outer recess wall **178** and outer side wall **156.** It is to be understood, however, that the arrangement of support ribs shown and described herein is merely exemplary and that any other number, arrangement, configuration and/or construction of support ribs can alternately be used.

The example in FIGS. 2-8 includes an arrangement in which a component (e.g., piston **106**) of a gas spring assembly is supported directly on an associated structural component (e.g., second structural component **SSC**). It will be recognized, however, that in some cases it may be desirable for a gas spring assembly to be supported in spaced relation to an associated structural component. In such cases, a spacer may be used that is secured between an end member of the gas spring assembly and the associated structural component. One example of a known spacer is shown and described in U.S. Patent No. 6,945,548, as has been discussed above.

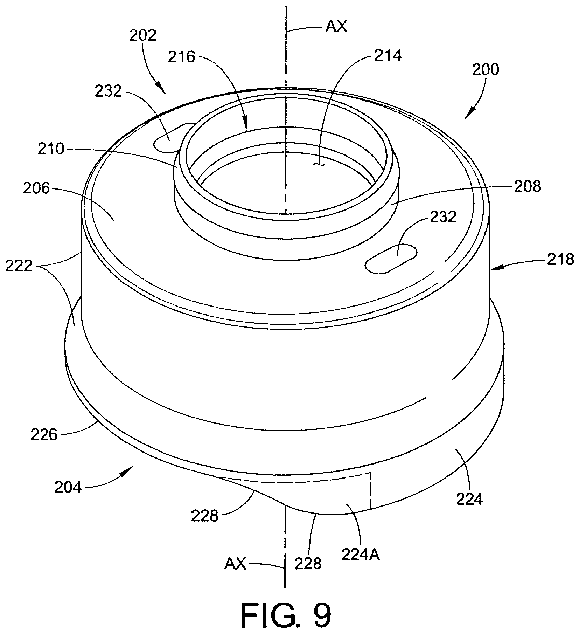

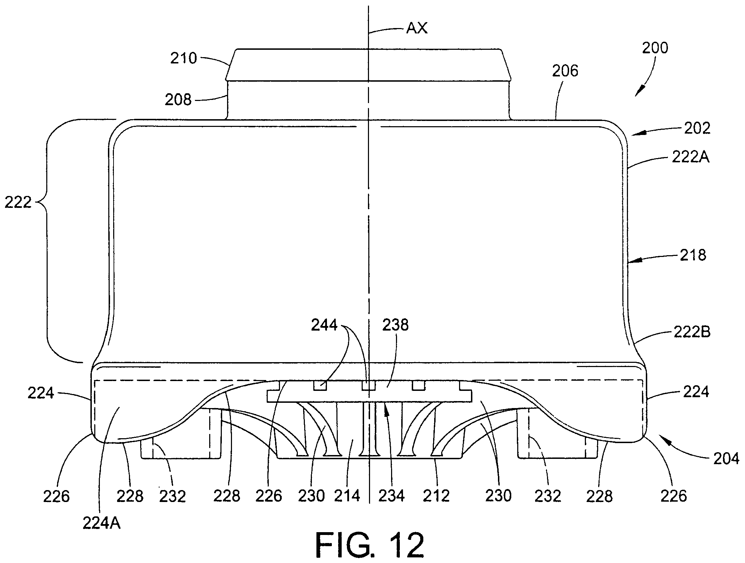

Turning now to FIGS. 9-12, an embodiment of a piston **200** suitable for use in forming a gas spring assembly according to the invention, such as gas spring assembly **102,** for example, is illustrated that includes a first end **202** and an opposing second end **204.** The first and second ends are longitudinally spaced from one another such that a central axis **AX** extends therebetween. First end **202** includes a first end wall **206** that is adapted to abuttingly engage an associated flexible wall or sleeve of a gas spring assembly (e.g., flexible sleeve **108**). An axially-extending annular wall **208** can optionally project from along end wall **206** in a direction generally opposite second end **204** and can be dimensioned to cooperatively receive an open end (e.g., second end **146**) of the flexible wall associated therewith. A radially outwardly-extending projection or lip **210** can optionally be included and can operate to at least partially maintain the open end of the flexible wall in abutting engagement with second end **202** of piston **200.** It will be appreciate, however, that any other suitable arrangement and/or configuration could alternately be used for securing the flexible wall on or along piston **200.**

Piston **200** also includes a second end wall **212** that is disposed along second end **204** and is adapted to cooperatively engage an associated structural component (e.g., second structural component **SSC** in FIG. 3). In the exemplary arrangement shown in FIGS. 9-12, second end wall **212** is approximately planar and is adapted to abuttingly engage an associated structural component for securement therealong. Piston **200** further includes an inner side wall **214** that extends circumferentially about axis **AX** and at least partially defines an inner cavity or chamber **216.** In the exemplary arrangement shown, inner side wall **214** extends in an approximately longitudinal direction and is generally disposed between first and second end walls **206** and **212.** A plurality of inner support walls (not shown) can optionally extend between different portions of inner side wall **214** and across inner cavity **216,** such as has been discussed above with regard to inner support walls **172,** for example.

Piston **200** also includes an outer side wall **218** that extends in a generally longitudinal direction from along first end **202** toward second end **204** and is spaced radially-outwardly from inner side wall **214** such that an outer cavity **220** is formed therebetween. Outer side wall **218** includes a first side wall portion **222** that extends from along first end **202,** such as from adjacent first end wall **206** thereof, for example, at a first axial distance or length **LT1.** Along this first length, first side wall portion **222** is fully circumferential and can extend substantially continuously about piston **200.** As such, an associated flexible wall that is axially displaced along first side wall portion **222** will be fully supported along the entire length thereof.

Outer side wall **218** also includes a plurality of second side wall portions **224** that extends from along first side wall portion **222** to a second axial distance or length **LT2.** In addition to varying in length, the plurality of second side wall portions differ from the first side wall portion in that a plurality of second side wall portions **224** are not fully circumferential. That is, the plurality of second side wall portions extend only partially about the circumference of piston **200,** such as along a circumferential section of first side wall portion **222,** for example. As a result, outer side wall **218** has a bottom or distal edge **226** that has a non-planar profile that varies along the circumference of the piston. That is, all circumferential portions of distal edge **226** (at a given diameter of outer side wall **218**) do not fall within a common plane. While it will be appreciated that such a non-planar profile of distal edge **226** can take any suitable form and/or configuration, in one exemplary embodiment the portions of distal edge **226** established by first side wall portion **222** will fall within a first plane (not shown) and at least some portion of distal edge **226** established by at least one second side wall portion **224** will fall within a second plane (not shown) that is parallel with the first plane (not shown).

As discussed above, a rolling lobe sleeve will, under certain conditions of operation and/or use, be displace beyond the distal edge of an outer side wall of the associated piston of a gas spring assembly. The provision of a plurality of second side wall portions **224** acts to extend the outer side wall beyond the area that is normally available to support the flexible sleeve of the gas spring assembly. In this way, such roll-off conditions can be minimized or eliminated, particularly in situations in which a gap or space is formed between the piston and the associated structural component, as discussed above.

It will be recognized, however, that because the second side wall portions do not extend around the full circumference of the piston, at least some portion of the flexible sleeve may remain unsupported and, thus, even partially roll-off a section of the distal edge of the piston. As such, in one exemplary embodiment, smooth transitions and gently curving surfaces are provide at, along and between the portions of distal edge **226** of outer side wall **218.** Such smooth transitions and gently curving surfaces can minimize undesirable influences (e.g., stress concentrations) that may act on a flexible wall during contact therewith. Such a situation may occur where the rolling lobe of a flexible sleeve is longitudinally displaced from along first side wall portion **222** onto and off of the plurality of second side wall portions **224,** such as has been discussed above, for example.

As such, the plurality of second side wall portions **224** is shown in FIGS. 9-12 as including optional transition sections **224A** that extend from opposing ends of the second side wall portions. Transition sections **224A,** if provided, can act to interconnect the distal extent of the second side wall portions with the distal extent of the first side wall portion. In this manner, distal edge **226** of outer side wall **218** can extend in a substantially continuous manner about the outer side wall. In one preferred embodiment, transition sections **224A** can include one or more curvilinear edge portions and can be approximately tangentially interconnected with the distal extents of first and second side wall portions **222** and **224.** As a result, distal edge **226** of outer side wall **218** can form a single contoured surface.

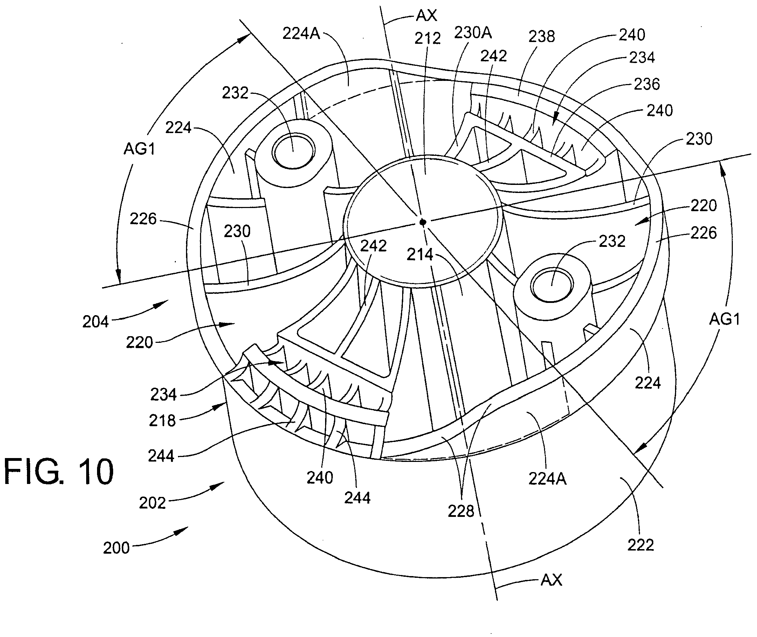

It will be appreciated that any number of two or more second side wall portions **224** can be provided on or along piston **200,** and that the two or more second side wall portions can be configured and/or arranged in any suitable manner and/or orientation. For example, two second side wall portions **224** are included in forming side wall **218** of piston **200** in the embodiment shown in FIGS. 9-12. These two second side wall portions are disposed circumferentially opposite one another (i.e., approximately 180 degrees apart) with each second side wall portion extending circumferentially through an angle **AG1,** as shown in FIG. 10.

Additionally, it will be appreciated that the plurality of second side wall portions can extend any suitable distance along the circumference of the piston, and such distance can be inclusive or exclusive of any optional transition sections (e.g., transition sections **224A**) that may be included. For example, second side wall portions **224** can extend through an angle **AG1** within a range of from approximately 10 degrees to approximately 170 degrees, and within a preferred range of from approximately 45 degrees to approximately 135 degrees, and within a more preferred range of from approximately 60 degrees to approximately 120 degrees. Furthermore, different ones of any two or more second side wall portions, can optionally extend through different circumferential lengths and/or angles, rather than being substantially identical as illustrated in FIGS. 9-12 with respect to second side wall portions **224.**

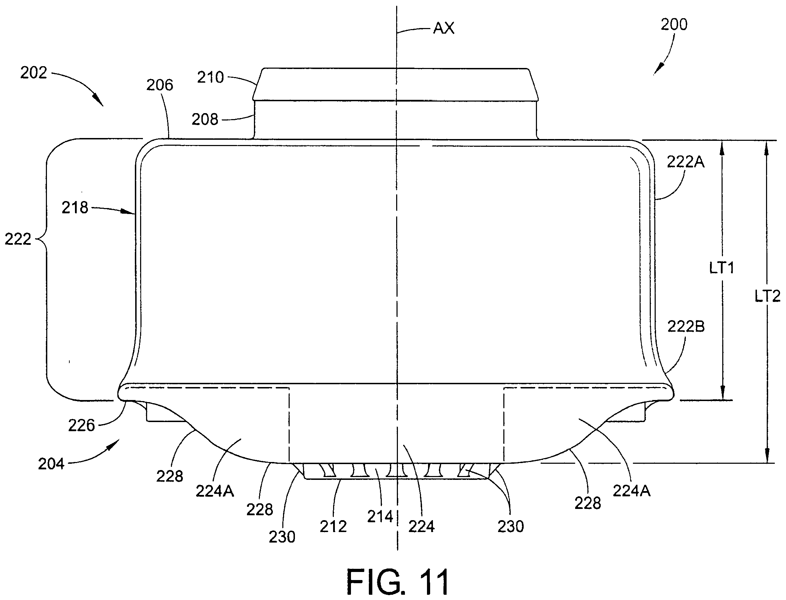

Furthermore, it will be appreciated that outer side wall **218** and/or any portion or portions thereof, can have any suitable size, shape, profile and/or configuration. For example, the outer side wall and/or any portion or portions thereof can include sections that are curvilinear, frustoconical, cylindrical or any combination thereof in shape or profile. As shown in FIGS. 9-12, first side wall portion **222** includes a substantially cylindrical upper section **222A** and a curvilinear lower section **222B,** as indicated in FIG. 11. Additionally, second side wall portions **224** are shown as being substantially cylindrical. However, any other arrangement and/or configuration could alternately be used.

Piston **200** also includes a plurality of outwardly-extending support walls **230** that extend between inner and outer side walls **214** and **218** and thereby structurally interconnect the same. It will be appreciated that outer support walls **230** can be of any suitable quantity, configuration and/or arrangement, and can extend along any portion of the longitudinal length of piston **200.** In one exemplary case, outer support walls **230** extend radially-outwardly from inner side wall **214** and along approximately the entire longitudinal length of at least first side wall portion **222** of outer side wall **218** such that outer cavity **220** is separated into a plurality of individual chambers (not numbered). However, it will be understood that any other number, arrangement and/or configuration of inner and/or outer support walls could alternately be used.

Piston **200** also includes at least one securement feature suitable for at least partially securing the piston on or along a corresponding structural component. In the exemplary arrangement shown, piston **200** includes a plurality of passages **232** that extend through the piston and are suitable for receiving at least a portion of a fastener or other securement element for suitably affixing piston **200** on or along an associated structural component. It will be appreciated, however, that any other suitable arrangement and/or configuration could alternately be used, such as one or more mounting studs (not shown) or threaded inserts (not shown), for example.

Piston **200** can also optionally include at least one mounting feature adapted to cooperatively engage a corresponding mounting feature on an associated structural component such that the inter-engagement of the cooperative mounting features can act to withstand, overcome or otherwise accommodate laterally-acting loads or forces that may be applied to the piston, such as has been discussed above with regard to the inter-engagement of projection **116** and recess **118** in FIG. 3, for example. That is, piston **200** can optionally include a recess **234** that is dimensioned to cooperatively receive an associated projection (e.g., projection **116** in FIG. 3) formed, installed or otherwise provided on or along an associated structural component with the recess and projection together forming a cooperative mounting arrangement, such as has been discussed above with regard to arrangement **114,** for example.

It will be appreciated that any number of one or more recesses, such as recesses **234,** for example, can be provided on piston **200.** As illustrated in FIG. 10, two recesses **234** are disposed circumferentially opposite one another (i.e., about 180 degrees apart). Such a configuration permits piston **200** to be positioned in either of two rotational orientations about axis **AX,** with circumferentially-opposing second side wall portions **224** disposed on each side of the associated structural component in either mounting position. Nonetheless, it is to be understood that any number of one or more cooperative mounting arrangements or portions thereof can be used (e.g., one projection with two or more cooperative recesses).

Additionally, any such one or more recesses, if included, can be provided on piston **200** in any suitable manner and using any suitable configuration and/or arrangement of structural elements and features to at least partially define the recess or recesses. In the exemplary arrangement shown, recesses **234** are positioned between inner and outer side walls **214** and **218,** respectively, such that forces and/or loads transferred to piston **200** by way of a recess are not directly applied to either of the inner or outer side walls, which is a preferred arrangement. Thus, in such a preferred arrangement, an associated projection (e.g., projection **116** in FIG. 3) will not directly abuttingly engage either of the inner side wall or the outer side wall of the piston. Rather, the one or more recesses can be established or otherwise defined through the inclusion of one or more recess walls that extend between adjacent ones of the outer support walls, which are identified in FIG. 10 by reference number **230A.** It will be appreciated that the one or more recess walls that at least partially define the one or more optional recesses of the piston can be of any suitable size, shape, construction, configuration and/or arrangement. In the arrangement shown, the recesses are at least partially defined by inner and outer recess walls **236** and **238,** respectively. In the embodiment shown, inner recess wall **236** extends in an approximately straight configuration and outer recess wall **238** is somewhat curved.

Additionally, piston **200** can optionally include one or more support walls or ribs extending between two of the recess walls and/or between one of the recess walls and another wall of the piston. It will be appreciated that such optional support ribs can act to buttress the recess walls and, thus, can result in a more robust recess that may be capable of increased performance (e.g., load carrying capacity). In the present exemplary arrangement, piston **200** optionally includes a plurality of recess support ribs **240** extending between inner and outer recess walls **236** and **238.** Additionally, piston **200** is shown as including an optional inner support rib **242** extending between inner recess wall **236** and inner side wall **214.** Piston **200** is also shown as optionally including a plurality of outer support ribs **244** extending between outer recess wall **238** and outer side wall **218.** It is to be understood, however, that the arrangement of support ribs shown and described herein is merely exemplary and that any other arrangement, configuration and/or construction of support ribs could alternately be used.

As used herein with reference to certain elements, components and/or structures (e.g., "first end member" and "second end member"), numerical ordinals merely denote different singles of a plurality and do not imply any order or sequence unless specifically defined by the claim language. Additionally, the term "gas" is used herein to broadly refer to any gaseous or vaporous fluid. Most commonly, air is used as the working medium of suspension systems and the components thereof, such as those described herein. However, it will be understood that any suitable gaseous fluid, such as nitrogen, could alternately be used.

## Claims

1. A gas spring assembly (102) comprising:
a flexible sleeve (108) including a sleeve wall extending between longitudinally-spaced sleeve ends (144, 146) and having a longitudinal axis (AX) extending therebetween, said sleeve wall extending circumferentially about said axis to at least partially define a spring chamber (142);
an end member (104) secured along one of said ends (144) of said flexible sleeve (108) such that a substantially fluid-tight seal is formed with said sleeve wall; and
a gas spring piston (200) secured on the other of said ends (146) of said flexible sleeve (108) such that a substantially fluid-tight seal is formed with said sleeve wall, said gas spring piston (200) comprising:
a first end wall (206) abuttingly engaging said flexible sleeve (108);
an outer side wall (218) extending longitudinally from along said first end wall (206), said outer side wall suitable for rolling a lobe of said flexible sleeve (108) therealong, said outer side wall (218) including a first side wall portion (222) at least partially defining a fully circumferential support area for abuttingly engaging said flexible sleeve (108), and said outer side wall (218) extending longitudinally from said first side wall portion (222) in a direction away from said first end wall (206);
an inner side wall (214) disposed in radially-inwardly spaced relation to said outer side wall (218) such that an outer chamber (220) is at least partially defined therebetween;
a plurality of support walls (230) extending outwardly between said inner side wall (214) and said outer side wall (218); and
a second end wall (212) adapted to engage an associated structural component (SSC),
**characterized in that**
said outer side wall (218) includes a plurality of second side wall portions (224) extending longitudinally between said first end wall (206) and said second end wall (212) from said first side wall portion (222) in the direction away from said first end wall (206), said plurality of second side wall portions (224) defining a plurality of partially circumferential support areas disposed in circumferentially-spaced relation to one another around said gas spring piston (200) for abuttingly engaging corresponding circumferentially-spaced apart portions of said flexible sleeve (108) upon longitudinal displacement of the lobe of said flexible sleeve (108) beyond said fully circumferential support area.

2. A gas spring assembly (102) according to claim 1, wherein said first side wall portion (222) of said gas spring piston (200) has a distal extent disposed at a first longitudinal distance (LT1) from said first end wall (206), and said plurality of second side wall portions (224) have a distal extent disposed at a second longitudinal distance (LT2) from said first end wall (206) that is greater than said first longitudinal distance (LT1) such that said plurality of second side wall portions (224) extend longitudinally beyond said distal extent of said first side wall portion (222).

3. A gas spring assembly (102) according to claim 2, wherein said outer side wall (218) of said gas spring piston (200) includes a distal edge (226) disposed opposite said first end wall (206), and said distal edge (226) is at least partially defined by said distal extent of said first side wall portion (222) and said distal extent of said plurality of second side wall portions (224) such that said distal edge (226) has a non-planar profile.

4. A gas spring assembly (102) according to claim 3, wherein said plurality of second side wall portions (224) of said gas spring piston (200) include first and second transition sections (224A) disposed along circumferentially opposite ends of each of said plurality of second side wall portions (224), said first and second transition sections (224A) interconnecting said distal extents of said plurality of second side wall portions (224) and said distal extent of said first side wall portion (222) such that said distal edge (226) of said outer side wall (218) extends substantially continuously about said outer side wall (218).

5. A gas spring assembly (102) according to any one of claims 1-4, wherein said plurality of support walls (230) of said gas spring piston (200) comprises first and second support walls (230) extending from said inner side wall (214) to said outer side wall (218) such that said inner and outer side walls (214, 218) are interconnected thereby, said first and second support walls (214, 218) being disposed in spaced relation to one another such that said outer chamber (220) is at least partially divided by said first and second support walls (230).

6. A gas spring assembly (102) according to any one of claims 1-5, wherein said inner side wall (214) of said gas spring piston (200) at least partially defines an inner chamber (216) having an open end disposed adjacent said first end wall (206).

7. A gas spring assembly (102) according to any one of claims 1-6, wherein said outer side wall (218) of said gas spring piston (200) includes a distal edge disposed in spaced relation to said first end wall (206), and said gas spring piston further comprises said second end wall (212) disposed opposite said first end wall (206), said second end wall (212) being substantially planar and adapted to abuttingly engage said associated structural component (SSC) such that said distal edge (226) of said outer side wall (218) is supported in spaced relation to the associated structural component (SSC).

8. A gas spring assembly (102) according to claim 7, further comprising at least one securement feature (174) operative to at least partially secure said gas spring piston (200) along said associated structural component (SSC).

9. A gas spring assembly (102) according to claim 8, further comprising an external mounting bracket (110) adapted to cooperatively align with said at least one securement feature (174) for securing said piston (200) on the associated structural component (SSC).

10. A gas spring assembly (102) according to any one of claims 1-9, wherein said gas spring piston (200) further comprises first and second recess walls (236, 238) positioned between said inner and outer side walls (214, 218) and extending between adjacent ones of said plurality of support walls (230), said first and second recess walls (236, 238) being radially spaced from one another to at least partially define a recess (234) adapted to receive an associated projection (116) of said associated structural support member (SSC) such that lateral loads acting on said gas spring piston (200) can be transferred to the associated projection (116).

11. A gas spring assembly (102) according to claim 10, wherein said outer chamber (220) has an open end formed toward said plurality of second side wall portions (224), and said recess (234) is at least partially disposed within said outer chamber (220) and accessible from along said open end.

12. A gas spring assembly (102) according to claim 11, further comprising one or more support ribs (240) extending between and connecting said first and second recess walls (236, 238).

13. A gas spring assembly (102) according to claim 11 or claim 12, further comprising one or more support ribs (242, 244) extending between and connecting one of said first recess wall (236) with said inner side wall (214) and said second recess wall (238) with said outer side wall (218).

## Patentansprüche

1. Gasfederanordnung (102), umfassend:
eine flexible Hülse (108) mit einer Hülsenwand, die zwischen den in Längsrichtung beabstandeten Hülsenenden (144, 146) verläuft und eine dazwischen verlaufende Längsachse (AX) einschließt, wobei die Hülsenwand in Umfangsrichtung um die Achse verläuft, um zumindest teilweise eine Federkammer (142) zu definieren;
ein Endelement (104), das entlang eines der Enden (144) der flexiblen Hülse (108) so befestigt ist, dass eine im Wesentlichen fluiddichte Dichtung mit der Hülsenwand gebildet wird; und
einen Gasfederkolben (200), der an dem anderen der Enden (146) der flexiblen Hülse (108) so befestigt ist, dass eine im Wesentlichen fluiddichte Dichtung mit der Hülsenwand gebildet wird, wobei der Gasfederkolben (200) umfasst:
eine erste Stirnwand (206) zum anliegenden Eingriff mit der flexiblen Hülse (108);
eine äußere Seitenwand (218), die in Längsrichtung entlang der ersten Stirnwand (206) verläuft, wobei die äußere Seitenwand zum Abrollen eines Nockens der flexiblen Hülse (108) an dieser entlang geeignet ist, wobei die äußere Seitenwand (218) einen ersten Seitenwandabschnitt (222) einschließt, der zumindest teilweise eine vollständig umlaufende Stützfläche zum anliegenden Eingriff mit der flexiblen Hülse (108) definiert, und wobei die äußere Seitenwand (218) in Längsrichtung von dem ersten Seitenwandabschnitt (222) in einer Richtung von der ersten Stirnwand (206) weg verläuft;
eine innere Seitenwand (214), die in radial nach innen beabstandeter Beziehung zu der äußeren Seitenwand (218) angeordnet ist, sodass dazwischen zumindest teilweise eine äußere Kammer (220) definiert ist;
eine Vielzahl von Stützwänden (230), die zwischen der inneren Seitenwand (214) und der äußeren Seitenwand (218) nach außen verlaufen; und
eine zweite Stirnwand (212), die so ausgebildet ist, dass sie in eine zugehörige Strukturkomponente (SSC) eingreift,
**dadurch gekennzeichnet, dass**
die äußere Seitenwand (218) eine Vielzahl von zweiten Seitenwandabschnitten (224) einschließt, die in Längsrichtung zwischen der ersten Stirnwand (206) und der zweiten Stirnwand (212) von dem ersten Seitenwandabschnitt (222) in der Richtung weg von der ersten Stirnwand (206) verlaufen, wobei die Vielzahl von zweiten Seitenwandabschnitten (224) eine Vielzahl von teilweise umlaufenden Stützflächen definiert, die in in Umfangsrichtung beabstandeter Beziehung zueinander um den Gasfederkolben (200) herum angeordnet sind, um beim Längsverschieben des Nockens der flexiblen Hülse (108) über den vollständig umlaufenden Stützbereich hinaus anliegend in Eingriff mit entsprechenden in Umfangsrichtung beabstandeten Abschnitten der flexiblen Hülse (108) zu gelangen.

2. Gasfederanordnung (102) nach Anspruch 1, wobei der erste Seitenwandabschnitt (222) des Gasfederkolbens (200) eine distale Ausdehnung aufweist, die in einem ersten Längsabstand (LT1) von der ersten Stirnwand (206) angeordnet ist, und die Vielzahl von zweiten Seitenwandabschnitten (224) eine distale Ausdehnung aufweisen, die in einem zweiten Längsabstand (LT2) von der ersten Stirnwand (206) angeordnet ist, der größer als der erste Längsabstand (LT1) ist, sodass die Vielzahl von zweiten Seitenwandabschnitten (224) in Längsrichtung über die distale Ausdehnung des ersten Seitenwandabschnitts (222) hinaus verläuft.

3. Gasfederanordnung (102) nach Anspruch 2, wobei die äußere Seitenwand (218) des Gasfederkolbens (200) eine distale Kante (226) einschließt, die gegenüber der ersten Stirnwand (206) angeordnet ist, und die distale Kante (226) zumindest teilweise durch die distale Ausdehnung des ersten Seitenwandabschnitts (222) und die distale Ausdehnung der Vielzahl von zweiten Seitenwandabschnitten (224) definiert ist, sodass die distale Kante (226) ein nicht planares Profil aufweist.

4. Gasfederanordnung (102) nach Anspruch 3, wobei die Vielzahl der zweiten Seitenwandabschnitte (224) des Gasfederkolbens (200) erste und zweite Übergangsabschnitte (224A) einschließt, die entlang der in Umfangsrichtung gegenüberliegenden Enden jedes der Vielzahl der zweiten Seitenwandabschnitte (224) angeordnet sind, wobei der erste und der zweite Übergangsabschnitt (224A) die distalen Abschnitte der Vielzahl von zweiten Seitenwandabschnitten (224) und die distale Ausdehnung des ersten Seitenwandabschnitts (222) so miteinander verbinden, dass die distale Kante (226) der äußeren Seitenwand (218) im Wesentlichen kontinuierlich um die äußere Seitenwand (218) verläuft.

5. Gasfederanordnung (102) nach einem der Ansprüche 1 bis 4, wobei die Vielzahl von Stützwänden (230) des Gasfederkolbens (200) eine erste und eine zweite Stützwand (230) umfasst, die von der inneren Seitenwand (214) zu der äußeren Seitenwand (218) verlaufen, sodass die innere und die äußere Seitenwand (214, 218) dadurch miteinander verbunden sind, wobei die erste und die zweite Stützwand (214, 218) im Abstand zueinander angeordnet sind, sodass die äußere Kammer (220) durch die erste und zweite Stützwand (230) zumindest teilweise unterteilt ist.

6. Gasfederanordnung (102) nach einem der Ansprüche 1 bis 5, wobei die innere Seitenwand (214) des Gasfederkolbens (200) zumindest teilweise eine innere Kammer (216) mit einem offenen Ende begrenzt, das angrenzend an die erste Stirnwand (206) angeordnet ist.

7. Gasfederanordnung (102) nach einem der Ansprüche 1 bis 6, wobei die äußere Seitenwand (218) des Gasfederkolbens (200) eine distale Kante einschließt, die im Abstand zu der ersten Stirnwand (206) angeordnet ist, und der Gasfederkolben ferner die zweite Stirnwand (212) umfasst, die gegenüber der ersten Stirnwand (206) angeordnet ist, wobei die zweite Stirnwand (212) im Wesentlichen planar und so ausgebildet ist, dass sie an der zugehörigen Strukturkomponente (SSC) anliegt, sodass die distale Kante (226) der äußeren Seitenwand (218) in beabstandeter Beziehung zu der zugehörigen Strukturkomponente (SSC) abgestützt wird.

8. Gasfederanordnung (102) nach Anspruch 7, ferner umfassend mindestens ein Befestigungselement (174), das den Gasfederkolben (200) entlang der zugehörigen Strukturkomponente (SSC) zumindest teilweise befestigt.

9. Gasfederanordnung (102) nach Anspruch 8, ferner umfassend eine externe Haltevorrichtung (110), die so beschaffen ist, dass sie mit dem mindestens einen Befestigungselement (174) zusammenwirkt, um den Kolben (200) an der zugehörigen Strukturkomponente (SSC) zu befestigen.

10. Gasfederanordnung (102) nach einem der Ansprüche 1 bis 9, wobei der Gasfederkolben (200) ferner eine erste und eine zweite Aussparungswand (236, 238) umfasst, die zwischen der inneren und der äußeren Seitenwand (214, 218) angeordnet sind und die zwischen angrenzenden aus der Vielzahl von Stützwänden (230) verlaufen, wobei die erste und die zweite Aussparungswand (236, 238) radial voneinander beabstandet sind, um zumindest teilweise eine Aussparung (234) zu definieren, die so ausgebildet ist, dass sie einen verbundenen Vorsprung (116) des zugehörigen Strukturträgerelements (SSC) aufnehmen kann, sodass auf den Gasfederkolben (200) einwirkende Querkräfte auf den zugehörigen Vorsprung (116) übertragen werden können.

11. Gasfederanordnung (102) nach Anspruch 10, wobei die Außenkammer (220) ein offenes Ende aufweist, das in Richtung der Vielzahl von zweiten Seitenwandabschnitten (224) ausgebildet ist, und die Aussparung (234) zumindest teilweise innerhalb der Außenkammer (220) angeordnet und entlang des offenen Endes zugänglich ist.

12. Gasfederanordnung (102) nach Anspruch 11, ferner umfassend eine oder mehrere Stützrippen (240), die zwischen der ersten und der zweiten Aussparungswand (236, 238) verlaufen und diese verbinden.

13. Gasfederanordnung (102) nach Anspruch 11 oder Anspruch 12, ferner umfassend eine oder mehrere Stützrippen (242, 244), die entweder zwischen der ersten Aussparungswand (236) und der inneren Seitenwand (214) verlaufen und diese verbinden oder zwischen der zweiten Aussparungswand (238) und der äußeren Seitenwand (218) verlaufen und diese verbinden.

## Revendications

1. Ensemble ressort à gaz (102) comprenant :
un manchon flexible (108) incluant une paroi de manchon s'étendant entre des extrémités de manchon espacées longitudinalement (144, 146) et ayant un axe longitudinal (AX) s'étendant entre elles, ladite paroi de manchon s'étendant de façon circonférentielle autour dudit axe pour définir au moins partiellement une chambre de ressort (142) ;
un élément d'extrémité (104) fixé le long d'une desdites extrémités (144) dudit manchon flexible (108) de telle sorte qu'un joint essentiellement étanche aux fluides est formé avec ladite paroi de manchon ; et
un piston à ressort à gaz (200) fixé sur l'autre desdites extrémités (146) dudit manchon flexible (108) de telle sorte qu'un joint essentiellement étanche aux fluides est formé avec ladite paroi de manchon, ledit piston à ressort à gaz (200) comprenant :
une première paroi d'extrémité (206) venant en prise en butée contre ledit manchon flexible (108) ;
une paroi latérale externe (218) s'étendant longitudinalement depuis le long de ladite première paroi d'extrémité (206), ladite paroi latérale externe appropriée pour faire rouler un lobe dudit manchon flexible (108) le long de celle-ci, ladite paroi latérale externe (218) incluant une première partie de paroi latérale (222) définissant au moins partiellement une zone de support complètement circonférentielle pour venir en prise en butée contre ledit manchon flexible (108), et ladite paroi latérale externe (218) s'étendant longitudinalement à partir de ladite première partie de paroi latérale (222) dans une direction à l'écart de ladite première paroi d'extrémité (206) ;
une paroi latérale interne (214) disposée dans une relation espacée radialement vers l'intérieur par rapport à ladite paroi latérale externe (218) de telle sorte qu'une chambre externe (220) est au moins partiellement définie entre elles ;
une pluralité de parois de support (230) s'étendant vers l'extérieur entre ladite paroi latérale interne (214) et ladite paroi latérale externe (218) ; et
une deuxième paroi d'extrémité (212) conçue pour venir en prise avec un composant structural associé (SSC),
**caractérisé en ce que**
ladite paroi latérale externe (218) inclut une pluralité de deuxièmes parties de paroi latérale (224) s'étendant longitudinalement entre ladite première paroi d'extrémité (206) et ladite deuxième paroi d'extrémité (212) à partir de ladite première partie de paroi latérale (222) dans la direction à l'écart de ladite première paroi d'extrémité (206), ladite pluralité de deuxièmes parties de paroi latérale (224) définissant une pluralité de zones de support partiellement circonférentielles disposées dans une relation espacée sur la circonférence les unes par rapport aux autres autour dudit piston à ressort à gaz (200) pour venir en prise en butée contre des parties correspondantes espacées sur la circonférence dudit manchon flexible (108) lors d'un déplacement longitudinal du lobe dudit manchon flexible (108) au-delà de ladite zone de support complètement circonférentielle.

2. Ensemble ressort à gaz (102) selon la revendication 1, dans lequel ladite première partie de paroi latérale (222) dudit piston à ressort à gaz (200) a une étendue distale disposée à une première distance longitudinale (LT1) de ladite première paroi d'extrémité (206), et ladite pluralité de deuxièmes parties de paroi latérale (224) a une étendue distale disposée à une deuxième distance longitudinale (LT2) de ladite première paroi d'extrémité (206) qui est supérieure à ladite première distance longitudinale (LT1) de telle sorte que ladite pluralité de deuxièmes parties de paroi latérale (224) s'étend longitudinalement au-delà de ladite étendue distale de ladite première partie de paroi latérale (222).

3. Ensemble ressort à gaz (102) selon la revendication 2, dans lequel ladite paroi latérale externe (218) dudit piston à ressort à gaz (200) inclut un bord distal (226) disposé opposé à ladite première paroi d'extrémité (206), et ledit bord distal (226) est au moins partiellement défini par ladite étendue distale de ladite première partie de paroi latérale (222) et ladite étendue distale de ladite pluralité de deuxièmes parties de paroi latérale (224) de telle sorte que ledit bord distal (226) a un profil non plan.

4. Ensemble ressort à gaz (102) selon la revendication 3, dans lequel ladite pluralité de deuxièmes parties de paroi latérale (224) dudit piston à ressort à gaz (200) inclut des première et deuxième sections de transition (224A) disposées le long d'extrémités opposées sur la circonférence de chacune parmi ladite pluralité de deuxièmes parties de paroi latérale (224), lesdites première et deuxième sections de transition (224A) interconnectant lesdites étendues distales de ladite pluralité de deuxièmes parties de paroi latérale (224) et ladite étendue distale de ladite première partie de paroi latérale (222) de telle sorte que ledit bord distal (226) de ladite paroi latérale externe (218) s'étend de façon essentiellement continue autour de ladite paroi latérale externe (218).

5. Ensemble ressort à gaz (102) selon l'une quelconque des revendications 1 à 4, dans lequel ladite pluralité de parois de support (230) dudit piston à ressort à gaz (200) comprend des première et deuxième parois de support (230) s'étendant de ladite paroi latérale interne (214) à ladite paroi latérale externe (218) de telle sorte que lesdites parois latérales interne et externe (214, 218) sont, de ce fait, interconnectées, lesdites première et deuxième parois de support (214, 218) étant disposées en relation espacée l'une par rapport à l'autre de telle sorte que ladite chambre externe (220) est au moins partiellement divisée par lesdites première et deuxième parois de support (230).

6. Ensemble ressort à gaz (102) selon l'une quelconque des revendications 1 à 5, dans lequel ladite paroi latérale interne (214) dudit piston à ressort à gaz (200) définit au moins partiellement une chambre interne (216) ayant une extrémité ouverte disposée adjacente à ladite première paroi d'extrémité (206).

7. Ensemble ressort à gaz (102) selon l'une quelconque des revendications 1 à 6, dans lequel ladite paroi latérale externe (218) dudit piston à ressort à gaz (200) inclut un bord distal disposé en relation espacée par rapport à ladite première paroi d'extrémité (206), et ledit piston à ressort à gaz comprend en outre ladite deuxième paroi d'extrémité (212) disposée opposée à ladite première paroi d'extrémité (206), ladite deuxième paroi d'extrémité (212) étant essentiellement plane et conçue pour venir en prise en butée contre ledit composant structural associé (SSC) de telle sorte que ledit bord distal (226) de ladite paroi latérale externe (218) est supporté en relation espacée par rapport au composant structural associé (SSC).

8. Ensemble ressort à gaz (102) selon la revendication 7, comprenant en outre au moins une caractéristique de fixation (174) opérationnelle pour fixer au moins partiellement ledit piston à ressort à gaz (200) le long dudit composant structural associé (SSC).

9. Ensemble ressort à gaz (102) selon la revendication 8, comprenant en outre un support de montage externe (110) conçu pour s'aligner coopérativement avec ladite au moins une caractéristique de fixation (174) pour fixer ledit piston (200) sur le composant structural associé (SSC).

10. Ensemble ressort à gaz (102) selon l'une quelconque des revendications 1 à 9, dans lequel ledit piston à ressort à gaz (200) comprend en outre des première et deuxième parois de renfoncement (236, 238) positionnées entre lesdites parois latérales interne et externe (214, 218) et s'étendant entre des parois adjacentes parmi ladite pluralité de parois de support (230), lesdites première et deuxième parois de renfoncement (236, 238) étant radialement espacée les unes des autres pour définir au moins partiellement un renfoncement (234) conçu pour recevoir une saillie associée (116) dudit élément de support structural associé (SSC) de telle sorte que des charges latérales agissant sur ledit piston à ressort à gaz (200) peuvent être transférées à la saillie associée (116).

11. Ensemble ressort à gaz (102) selon la revendication 10, dans lequel ladite chambre externe (220) a une extrémité ouverte formée en direction de ladite pluralité de deuxièmes parties de paroi latérale (224), et ledit renfoncement (234) est au moins partiellement disposé au sein de ladite chambre externe (220) et accessible depuis le long de ladite extrémité ouverte.

12. Ensemble ressort à gaz (102) selon la revendication 11, comprenant en outre une ou plusieurs nervures de support (240) s'étendant entre, et reliant, lesdites première et deuxième parois de renfoncement (236, 238).

13. Ensemble ressort à gaz (102) selon la revendication 11 ou la revendication 12, comprenant en outre une ou plusieurs nervures de support (242, 244) s'étendant entre, et reliant, l'une parmi ladite première paroi de renfoncement (236) avec ladite paroi latérale interne (214) et ladite deuxième paroi de renfoncement (238) avec ladite paroi latérale externe (218).
